# EUROPEAN PATENT SPECIFICATION

(11) **EP 2 843 157 B1**
(45) Date of publication and mention of the grant of the patent: **19.10.2016**
(21) Application number: 14182996.0
(22) Date of filing: 01.09.2014
(51) Int. Cl.: E04H 3/28, B62B 3/02

(54) **A modular staging system with a trolley**
Modulares Bühnensystem mit Trolley
Système de plateforme modulaire avec un chariot

(30) Priority: 30.08.2013 GB 201315496
(43) Date of publication of application: 04.03.2015
(73) Proprietor: Flowstore Systems Ltd, Hayes, Middlesex UB3 1AN (GB)
(72) Inventor: Dennis, Simon James, Hayes, Middlesex UB3 1AN (GB)
(74) Representative: Dolleymores

(56) References cited:
- WO-A1-99/06653
- US-A1- 2005 011 135

## Description

The present invention relates to a modular staging system, and a trolley for use in a modular staging system.

Venues such as schools and community centres often do not have a permanent stage. When these venues want to show a performance, for example, a play, a concert or fashion show, they erect a temporary stage. As these venues are usually used for multiple different purposes, they do not have a permanent stage because of the amount of space that would be permanently taken up by the staging. Therefore, in order to enable the venues to store the stage in a more space efficient matter, such temporary stages are made of multiple units that can be disconnected to allow the stage to be disassembled when it is not in use. Such stages are known as "modular staging systems".

WO99/06653 A1 discloses a trolley and modular staging system according to the preamble of claims 1 and 2, respectively.

The present invention is directed to an improved modular staging system.

According to a first aspect of the present invention there is a trolley for use in a modular staging system, wherein the trolley comprises wheels and is moveable between a first configuration in which the trolley is suitable for transporting one or more components of the staging system, and a second configuration in which the trolley forms part of a stage; wherein the trolley further comprises a support structure and a panel detachably connected to the support structure; wherein the support structure depends from the first surface of the panel when the trolley is in the second configuration, characterised in that, the surface of the panel opposite the first surface forms a second surface, wherein when the trolley is in the first configuration, the support structure is mounted to the second surface of the panel.

The trolley of the present invention has the advantage that it forms part of the stage when the stage is assembled from the modular staging system.

According to a second aspect of the present invention there is a modular staging system comprising a trolley and one or more other modular units, wherein the trolley comprises wheels and is moveable between a first configuration in which the trolley is suitable for transporting one or more components of the staging system, and a second configuration in which the trolley and the one or more other modular units can be assembled into at least part of a stage; wherein the trolley further comprises a support structure and a panel detachably connected to the support structure; wherein the support structure depends from the first surface of the panel when the trolley is in the second configuration, characterised in that, the surface of the panel opposite the first surface forms a second surface, wherein when the trolley is in the first configuration, the support structure is mounted to the second surface of the panel. Modular units are units that are adapted to fit together. As the trolley is adapted to fit with the other modular units, the trolley is also a type of modular unit.

The modular staging system of the second aspect of the present invention has the advantage that all parts of the system are in use when the stage is assembled. In addition, in the first configuration, the trolley is suitable for transporting other components of the modular staging system, for example, the trolley can transport the one or more other modular units of the stage, side rails, and step units.

The trolley and the other modular units may form a complete stage. Alternatively, they may be adapted to connect to one or more other trolleys, modular units and/or other components such as side rails to form a stage.

The panel of the trolley may be manufactured from wood, for example plywood. The plywood panel may have a thickness of 18mm, a width of 750mm, and a length of 750mm. The wooden panel may be coated with a non-slip surface. In alternative embodiments, the wooden panel may be carpeted.

The other modular units preferably also comprise a support structure and panel, and the panels of the trolley and the other modular units preferably form the substantially continuous surface of the stage. Preferably, the panels of the trolley and the other modular units are substantially rectangular (preferably square) in shape. This is because rectangular shaped units can easily fit together without leaving any spaces between the units. The panels and/ or the support structures of the trolley and the other modular units are also preferably all the same size. In addition, the support structures of the trolley and the other modular units all preferably have the substantially the same configuration. However, the exact shape of the panels of the trolley and the other modular units depends on the desired overall shape of the stage as a whole. For example, depending on the overall shape of the stage, some of the panels may be triangular. Alternatively, the panels may have the shape of another polygon such as a pentagon or a hexagon.

In addition, the support structures and panels of the other modular units are also preferably adapted to be detachably connected together. This allows the other modular units to be disassembled before they are loaded onto the trolley in its first configuration.

To be detachably mountable, the panel of the trolley preferably comprises one or more holes or recesses, wherein each hole or recess is positioned to receive a part of the support structure when the panel is connected to the support structure. If the panel is provided with holes, these holes pass from one surface of the panel to the other. In contrast, recesses only extend part of the way through the panel. Each hole and recess is positioned, shaped, and of a diameter or cross section of sufficient size to receive a part of the support structure. This feature enables the panels to be securely held onto the support structure, yet still able to be detached from the support structure when required.

The diameter of the holes/ recesses is larger than that of the tubes so that the tubes can be easily slotted into the holes/ recesses. For example, if the support structure is formed from tubes that have a diameter of 28mm, the panel may be provided with circular holes or recesses positioned to receive these tubes that have a diameter of 32mm.

The support structure may be provided with protrusions specifically positioned, shaped and sized to fit within the one or more holes or recesses in the panel.

In alternative embodiments, the panel and support structure may be detectably connected together in other ways, for example, by providing a means for clipping the panel onto the support structure, or by providing ledges on the support structure (for example, through the use of L-shaped angles) that are adapted to hold the panel in place. In these embodiments, the panel would not need to have any holes or recesses. In further embodiments, the panel may be provided with one or more protrusions adapted to fit within corresponding holes or recesses on the support structure.

The panel of the trolley may comprise one or more holes or recesses which are shaped and sized to receive part of the side rails of the modular staging system when the trolley is in the first, transportation, configuration. The panel may then be adapted to transport side rails of the staging system, leaving its support structure to be transported by another trolley unit. The side rails may form one or more sides to the trolley when it is in its first configuration. This could then enable the trolley to transport further components of the staging system, for example, more side rails. However, the modular staging system may not comprise such side rails.

The panels of the other modular units preferably also comprise one or more holes or recesses, wherein each hole or recess is positioned to receive a part of the support structure when the panel is connected to the support structure. However, the panels of the other modular units may also be detachably connected to the support structures using alternative means, for example, those outlined above.

Preferably, the wheels of the trolley depend from a first surface of the panel.

In the second configuration, the trolley is adapted to form part of the stage. It is, therefore, essential that the trolley is able to form a stable structure that will not move around when someone stands on it. If the wheels and support structure are both mounted to a first surface of the panel, then the support structure can hold the wheels away from the ground and provide a stable base for the trolley when it is in the second configuration.

Preferably, at least one of the wheels of the trolley is positioned radially inwards of the support structure when the trolley is in the second configuration. To be positioned radially inwards, the wheel is positioned so that it is at least partially surrounded by the support structure. For example, if the support structure is a frame that extends around the perimeter of the panel, a wheel that lies at the centre of the panel would be considered to be positioned radially inwards of the support structure.

More preferably, all of the wheels of the trolley are positioned radially inwards of the support structure when the trolley is in the second configuration. For maximum stability, all of the wheels are preferably as far radially outwards as possible while still inwards of the support structure. It is preferable to have one or more wheels positioned radially inwards of the support structure as this enables the panel to be securely held onto the support structure when the trolley is in the second configuration.

However, in alternative embodiments, one or more of the wheels may lie radially outside the support structure. For example, the support structure may comprise a central pillar and, when the trolley is in the second configuration, all of the wheels are positioned radially outwards of this pillar. Alternatively, the support structure can include one or more legs and the wheels be positioned to lie outwardly from at least one leg. Other variations may well be appropriate.

The trolley unit may comprise three or four wheels (preferably four), and the wheels are preferably castors. Alternatively, the wheels may have another form, for example, each trolley unit could comprise two wheels joined by an axle, wherein the axle is attached to the first surface of the panel.

In the first, transportation, configuration, the support structure of the trolley is mounted to the second surface of the panel so that the panel forms the base of the trolley. As the panel forms the base of the trolley, when the trolley is in the first configuration, the wheels of the trolley are designed to be in contact with the ground. This allows the trolley to be wheeled around. This is in contrast to the second configuration. When the trolley unit is in the second configuration, it is the support structure that is designed to be in contact with the ground. As the panel is mounted on top of the support structure of the trolley, the wheels of the trolley are now suspended above the ground.

Preferably, the support structure is mounted to the first surface of the panel in a first orientation, and wherein the support structure is mounted to the second surface of the panel in a second orientation, wherein to move the support structure between the first orientation and the second orientation, the support structure is inverted.

The support structure of the trolley preferably comprises a frame. This frame may be attached towards the edge of the panel when the trolley is in the first and second configurations. If the frame is attached towards the edge of the panel, the trolley comprises an area within the frame in the middle of the panel. This area can be used to hold other components of the modular staging system when the trolley is in the first, transportation, configuration. In addition, the area can receive one or more wheels of the trolley when the trolley is in the second configuration.

The frame preferably comprises at least one leg and a leg support member. When the trolley is in the first configuration, the wheels are in contact with the ground, and the at least one leg extends generally vertically upwards away from the ground. When the trolley is in the second configuration, the at least one leg extends generally vertically downwards to contact the ground, and the wheels are suspended above the ground by the frame.

For example, the leg support member may comprise a tube bent into a rectangular shape. The frame may then additionally comprise four legs, wherein each leg is provided at a corner of the rectangular leg support member.

Preferably, the leg support member is mounted to the second surface of the panel when the trolley is in the first configuration, and the leg support member is mounted to the first surface of the panel when the trolley is in the second configuration, i.e. the frame is preferably inverted between the first and second configurations.

In the first configuration, the at least one leg projects upwards away from the panel to form at least some of the main body of the trolley. Therefore, in this first configuration, the panel is supporting the frame. However, in the second configuration, the at least one leg projects downwards to contact the ground and the panel is mounted to the frame. The frame is, therefore, supporting the panel in the second configuration.

Preferably, at least one of the wheels of the trolley is positioned radially inwards of the leg support member when the trolley is in the second configuration. In other words, one or more wheels are preferably mounted on the panel of the trolley more centrally than the leg support member. More preferably, all of the wheels of the trolley are positioned radially inwards of the leg support member when the trolley is in the second configuration. For example, if the leg support member is formed from tubing that has been formed into a rectangular configuration, the wheels preferably lie inside this tubing in the middle of this rectangle.

Preferably, the frame additionally comprises one or more projections on the opposite side of the leg support member to the at least one leg, wherein the portions are sized and positioned to fit within a hole or recess in the panel when the panel is connected to the frame in either the first or second configurations.

Preferably, the frame is made from tubing, for example, tubing with a circular or rectangular cross section. The tubing is preferably hollow. For example, the frame may be made from hollow steel tubing such as stainless steel tubing, or ABS-plastic (acrylonitrile butadiene styrene) coated steel tubing. The tubing may have an outer diameter of 28 mm.

In alternative embodiments, the support structure may not be a frame. Instead, the support structure could be formed from two or more panels that are adapted to fit together to form a support for the panel. For example, the support structure may comprise four identical panels that are adapted to fit together to form a square support. Alternatively, the support structure could comprise two sets of two identical panels that can fit together to form a rectangular support. The panels may be fitted together using slots provided on each panel, wherein the slots of two differed panels are shaped and sized to fit together to form a firm support. These slots may, for example, form a halving joint. The panels could also be fitted together using clips.

In other embodiments, the panels of the support structure could be permanently joined together. For example, the panels could be joined by hinges to make the support structure collapsible. In one embodiment, a rectangular support structure is formed from six panels: two long panels and four smaller panels. The two long panels form opposite sides of the rectangle. The other two sides of the rectangle are each formed by two of the smaller panels. Hinged connections are provided at the corners of the rectangle and between the two smaller panels forming a side. The connections between the smaller panels fold in the reverse direction to the connections at the corners. This makes it possible to fold the structure flat when it is not in use, but enable it to form a rigid structure when opened out.

In further embodiments, the support structure may be a frame that is made up of a plurality of folding rods, typically twelve folding rods. The rods may have different lengths according to their orientation when erected. For example, in embodiments with twelve rods, there may be four rods of a first length, where these four rods are adapted to form the corners of the unit when it is erected. The other eight rods may then be used as diagonal braces between the corners of the unit. These other eight rods are preferably all the same length. To allow the folding framework to open up or pop-up when required, the rods are typically connected together at the corners of the unit by connectors that are pivotally connected to the rods.

The one or more modular units are, preferably, adapted to be stacked on the trolley unit in a nested configuration when the trolley unit is in the first configuration. This arrangement reduces the amount of space taken up by the stacked units, increasing the number of units that can be transported by a single trolley unit. Preferably, each unit is designed to transport between 10 and 25 other modular units. More preferably, each unit transports between 15 and 20 other modular units.

A method of assembling a stage from a modular staging system comprises the following steps: transporting the trolley in the first configuration, removing any other components of the modular staging system supported by the trolley from the trolley, converting the trolley from the first configuration to the second configuration, and assembling at least part of a stage from the trolley in the second configuration, and the one or more other modular units.

Preferably, the trolley comprises a support structure, and a panel detachably connected to the support structure, wherein the wheels of the trolley depend from a first surface of the panel, wherein converting trolley from the first configuration to the second configuration the involves detaching the panel from the support structure, inverting the support structure, and mounting the support structure in the inverted configuration to the first surface of the panel such that at least one of the wheels is positioned within the support structure.

Preferably, mounting the support structure to the first surface of the panel involves passing one or more wheels through the centre of the support structure until the panel is fitted against the support structure.

Embodiments of the invention will now be described, by way of example only, with reference to the accompanying drawings, in which:
Figure 1 shows a modular staging system according to an embodiment of the invention,
Figure 2 shows the frames of three of the modular units of the staging system of Figure 1 joined together,
Figure 3 shows the panel of the trolley unit of the modular staging system of Figure 1,
Figure 4 shows the trolley unit of Figure 1 in its first, transportation, configuration,
Figure 5 shows the trolley of Figure 4 holding a panel of another modular unit of the staging system,
Figure 6 shows the trolley of Figure 4 holding a plurality of panels of other modular units of the staging system,
Figure 7 shows the trolley of Figure 4 holding three frames of other modular units of the staging system,
Figure 8 shows the trolley of Figure 4 holding a plurality of frames of other modular units of the staging system,
Figure 9 shows the trolley unit of Figure 1 in its second configuration,
Figure 10 shows the trolley unit of Figure 9 with the lid removed.
Figure 11 shows the trolley unit of an alternative embodiment of a modular staging system,
Figure 12 shows the trolley unit of Figure 11 in its first, transportation, configuration,
Figure 13 shows another embodiment of a modular staging system, and
Figure 14 shows the trolley unit of Figure 13 in its first, transportation, configuration,

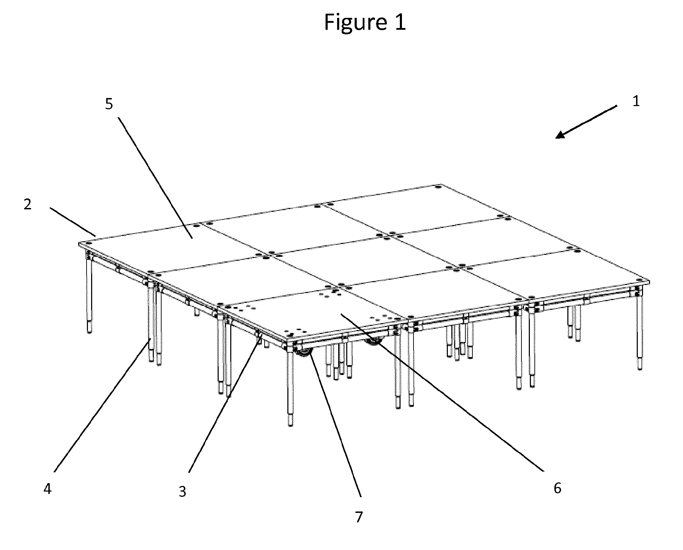

Referring to Figures 1 to 10, a first embodiment of a modular staging system is shown.

Figure 1 shows a modular staging system 1 comprising nine modular units 2, 3. There may of course be any number of modular units. Each modular unit comprises a frame 4 and a substantially rectangular panel 5, 6 mounted on each frame 4. In the embodiment shown, the panels 5, 6 are detachable from the frames 4 of the modular units 2,3.

The staging system 1 of Figure 1 comprises two different modular units. Eight of the modular units are of a basic unit 2. Each basic unit comprises a frame 4 and a panel 5. The remaining unit is the trolley unit 3. This trolley unit comprises the same frame 4 as the basic unit but the panel 6 mounted on the frame 4 is different as it has four wheels 7 attached thereto (only two of which are shown).

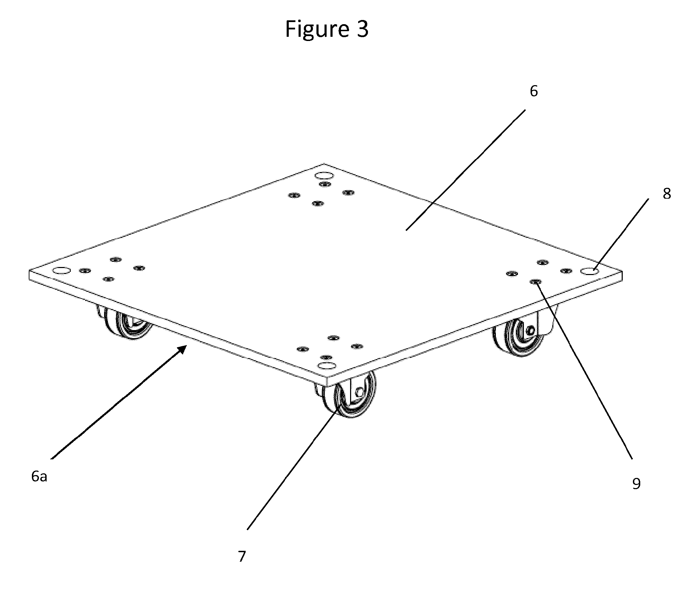

Referring to Figure 3, the panel (or deck board) 6 of the trolley unit 3 is shown in more detail. The wheels 7 are mounted to a first surface 6a of the panel 6. The panel also comprises four holes 8 that are adapted to receive the parts of the frame 4. The holes therefore enable the frame 4 and panel 6 to be coupled together. In the embodiment shown, the wheels 7 are castors, and these wheels are attached to the panel using bolts 9.

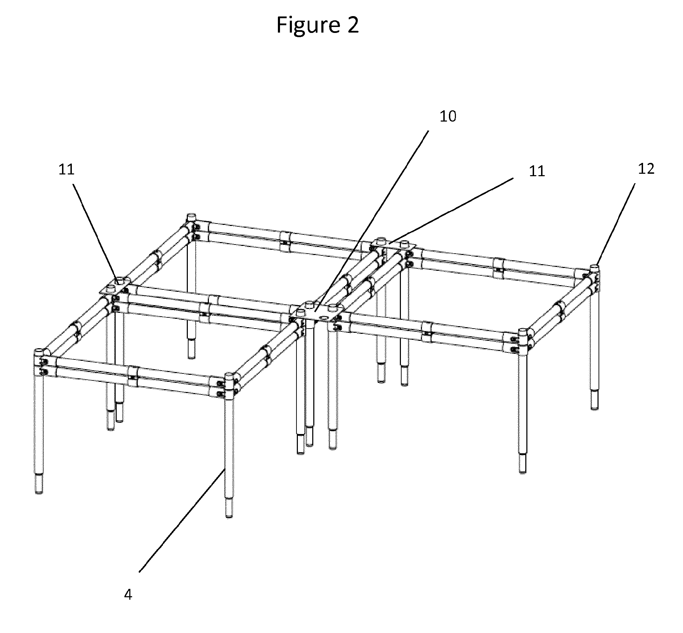

Figure 2 shows three of the frames 4 of the modular staging system 1 connected together by a connection means 10, 11. The first of these connection means is a plate 10 that attaches to the corners of the 4 frames of four of the modular units 2. The second of these connection units is a smaller plate 11 that only attaches to the corners of the frames 4 of two units 2. The larger plate 10 is designed to be used at the centre of the modular staging system, whereas the smaller plate 11 is designed to be used to connect units that are positioned at the edge of the stage. Both types of plate 10, 11 contain holes that are adapted to receive the upwardly protruding portions 12 of the frames 4.

The upwardly protruding portions 12 of the frames 4 also hold the panels 5, 6 on the frames 4. The panel 5, 6 of each unit 2, 3 is mounted to the frame 4 by slotting upwardly projecting portions 12 of the frame 4 into corresponding holes 8 provided in the panels 5, 6.

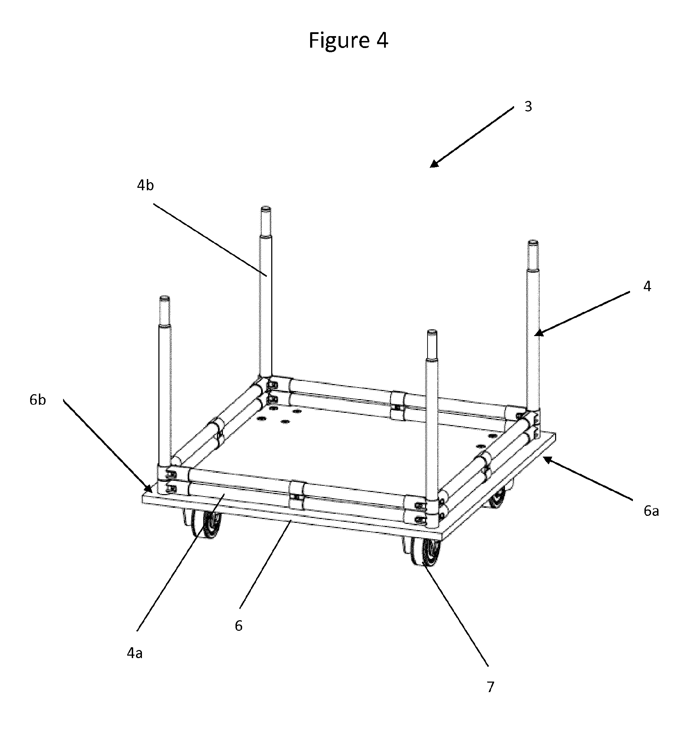

Figure 4 shows the trolley unit 3 of the modular staging system in a first, transportation, configuration. In this configuration, the trolley unit 3 forms a trolley for transporting other modular units. The panel 6 forms the base of the trolley. The wheels 7 are mounted to the first surface 6a of the panel, and the frame 4 is provided on the second surface 6b. Although not shown in the drawing, the frame 4 is coupled to the panel 6 by passing the projecting portions 12 of the frame through the holes 8 provided in the panel 6.

The frame comprises four legs 4b and a leg support member 4a, wherein each leg 4b is mounted to a corner of the leg support member 4a. The four legs 4b project upwards from the leg support member 4a. The legs 4b, therefore, help to define the body of the trolley, and the leg support member is the part of the frame 4 is contact with the panel 6.

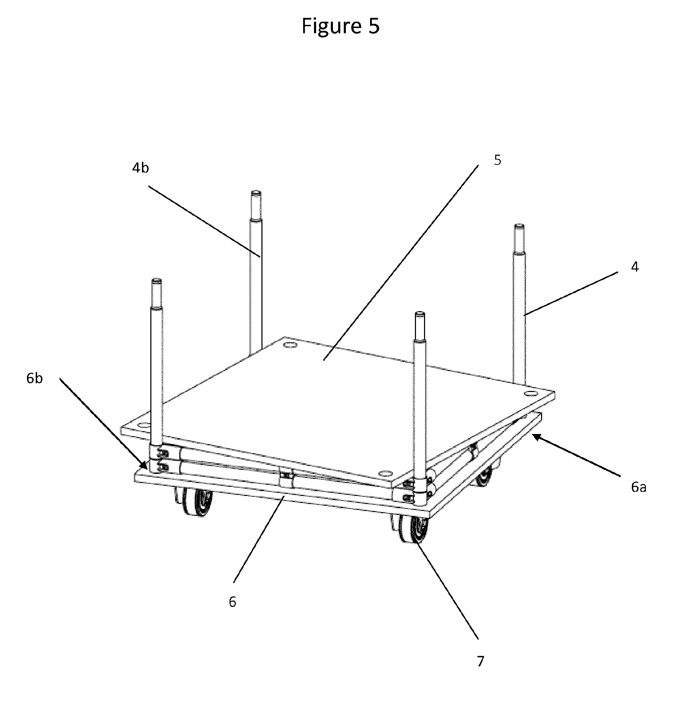

Embodiments of the trolley unit 3 holding one or more components of the modular staging system 1 are shown in Figures 5 to 8. In Figure 5, the trolley 3 is holding a single panel 5. This panel 5 is rotated relative to the panel 6 of the trolley so enable it to fit within the legs 4b of the frame 4.

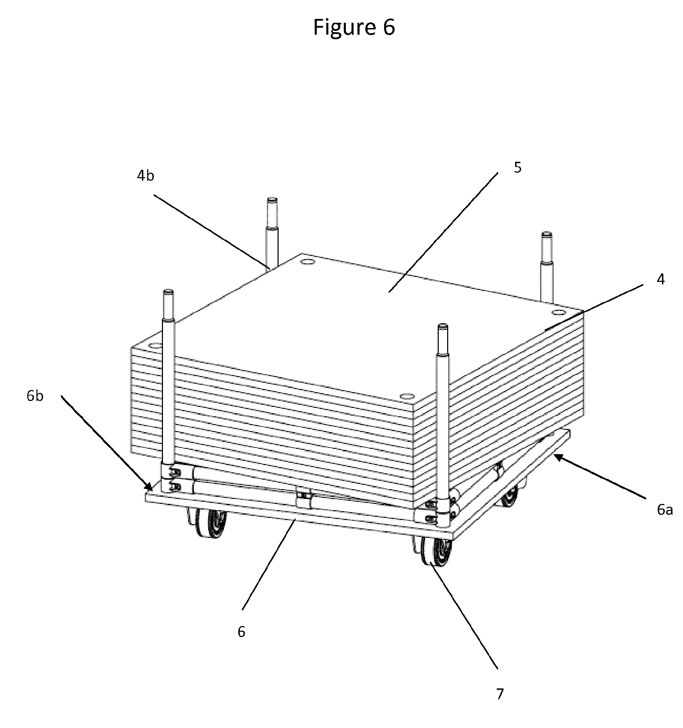

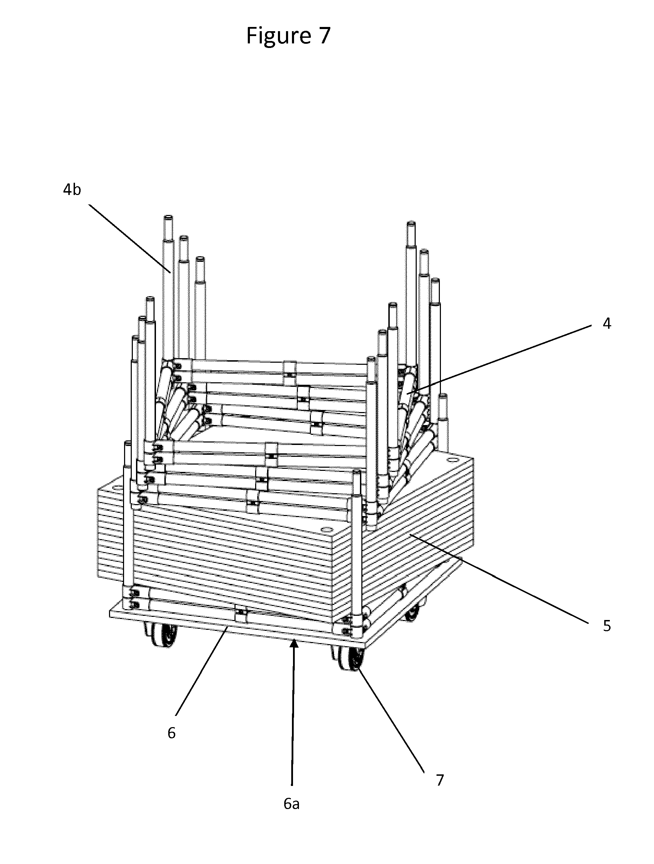

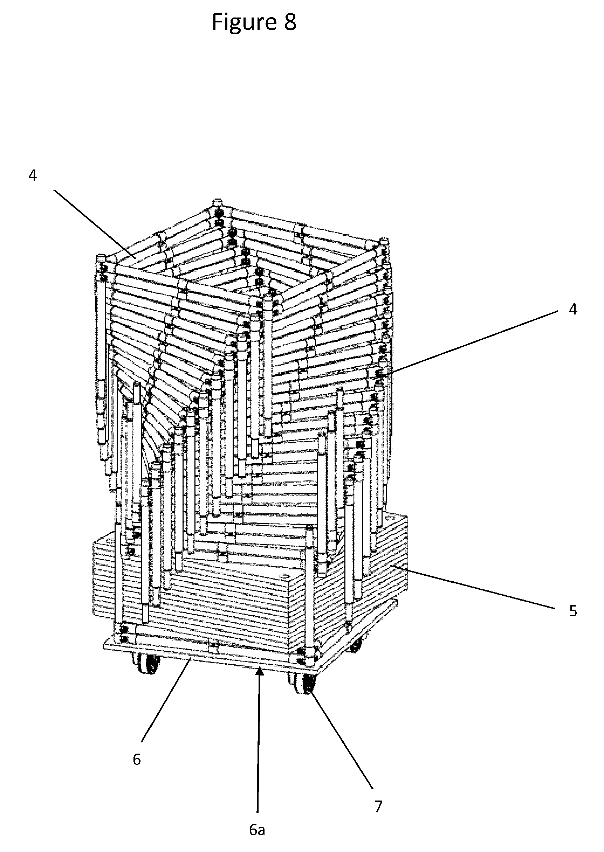

In Figure 6, the trolley 3 is shown holding all eight panels 5 of the eight basic units 2 of the modular staging system 1 of Figure 1. However, Figure 6 also shows the trolley 3 holding an additional six panels 5 of a further six basic units 2. These additional six basic units 2 would be used to assemble a stage comprising fifteen modular units. In Figure 7 the trolley 3 is shown holding three frames 4 of the basic units 2 in addition to the fourteen panels 5, and in Figure 8 the trolley unit 3 is shown with all fourteen panels 5 and frames 4 of the basic units 2 required to assemble a fifteen unit modular stage. As can be seen from Figure 8, the frames 4 nest inside each other on top of the trolley 3.

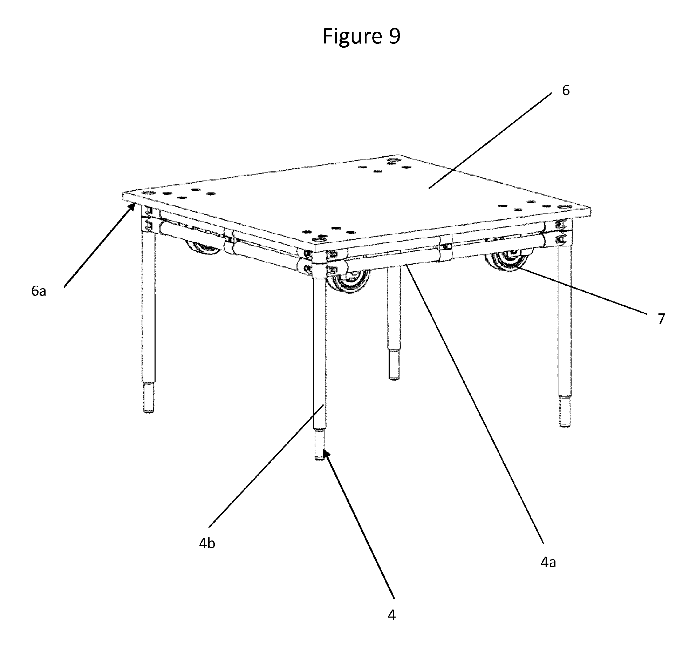

A trolley unit 3 in its second configuration is shown in Figure 9. In this configuration, the first surface 6a of the panel 6 is in contact with the frame 4. The panel 6 is supported by the frame so that the wheels 7 attached to the first surface 6a of the panel 6 are suspended above the ground and the legs 4b of the frame 4 are in contact with the ground. As the wheels 7 are not in contact with the ground, the trolley unit cannot be slid as easily across the ground in the second configuration as it can in its first configuration. Therefore, the trolley unit 3 is used to form part of the stage shown in Figure 1 in this second configuration.

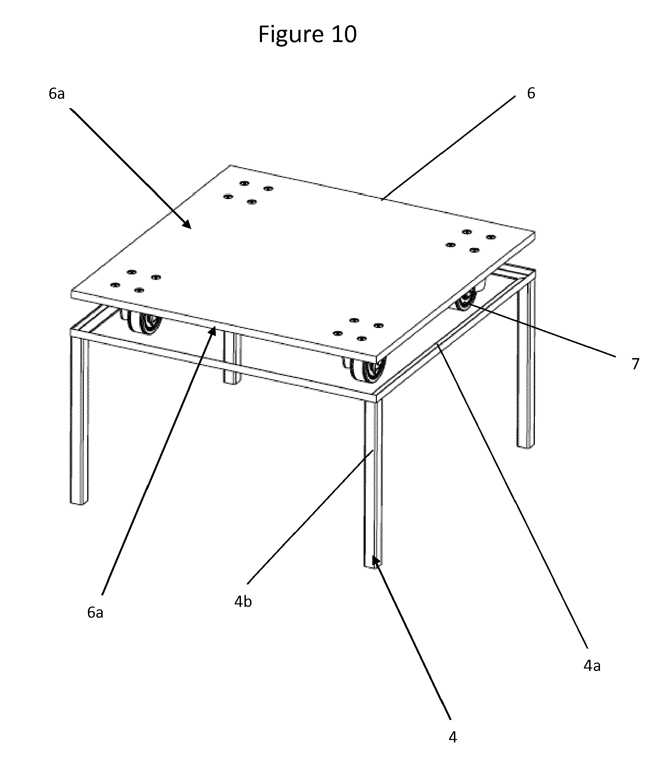

In the embodiment shown, all four of the wheels 7 of the panel are positioned within the leg support structure 4a. The wheels 7 are, therefore, mounted to the panel so that they lie radially inwards from the frame 4 when panel 6 is positioned on top of the frame 4. Figure 10 shows the panel 6 being positioned on the frame 4 so that all four of the castors 7 lie within the leg support structure 4a.

In embodiments of the invention, the frames 4 of the modular units 2, 3 may be made from hollow steel tubing. For example, the tubes may be made from stainless steel, or from ABS (acrylonitrile butadiene styrene) plastic coated steel. The tubes may have an outer diameter of 28 mm.

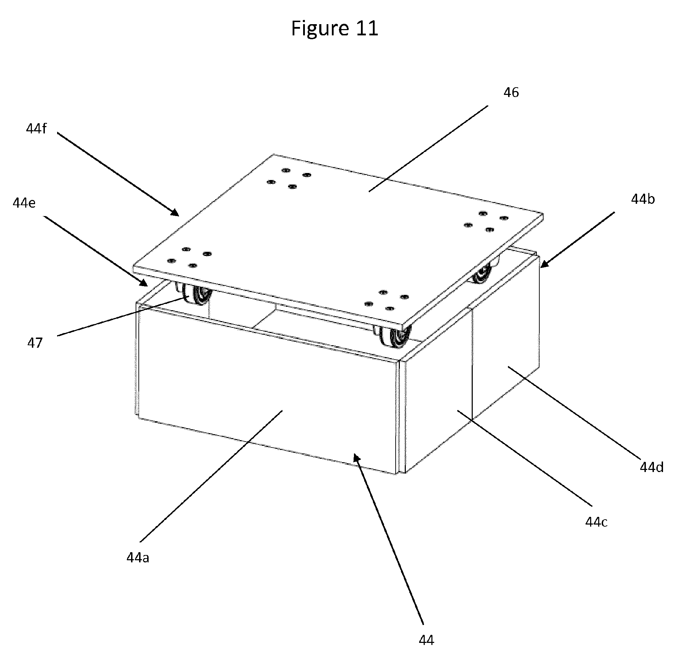

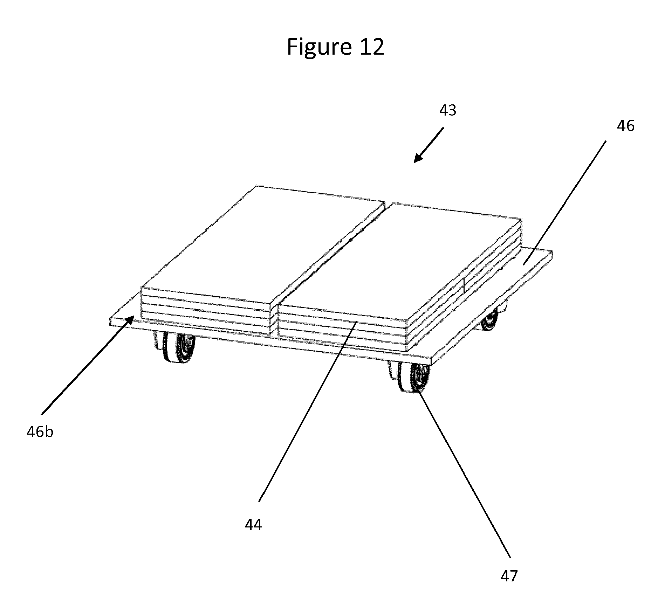

Referring to Figures 11 and 12, a second embodiment of a modular staging system is shown. In this second embodiment, the support structure 44 is formed from six side panels 44a, 44b, 44c, 44d, 44e, 44f that are hinged together at the ends of each side panel. Two of these side panels 44a, 44b are long panels that extend along a side of the support structure. The other four side panels 44c, 44d, 44e, 44f are smaller panels that are hinged together at the centre of the sides of the support structure so that the sides can bend inwards. The hinges provided at the corners of the support structure 44 bend in the opposite direction to the hinges between the smaller panels 44c, 44d, 44e, 44f. This enables the support structure to be folded flat.

Once the support structure 44 has been folded, it can then be placed on the second surface 46b of the panel 46. When the support structure 44 is placed on the panel 46, the trolley 43 is in its first, transportation, configuration. The trolley 43 can be moved around using the wheels 47 in this first configuration.

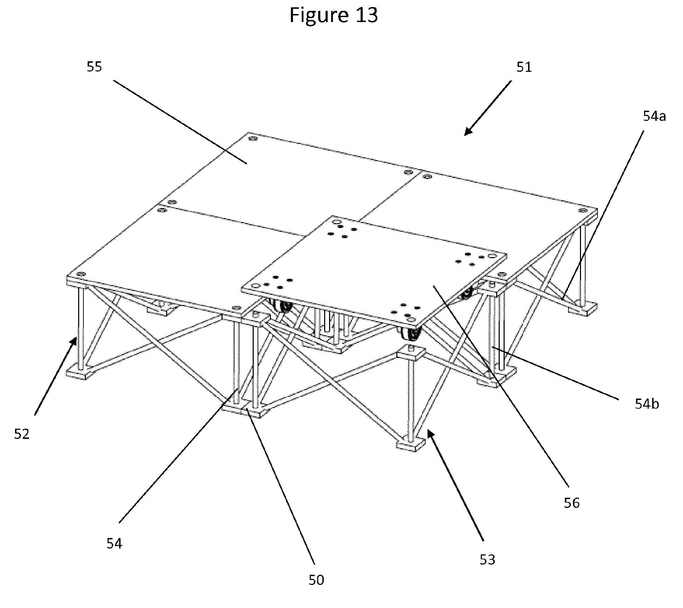

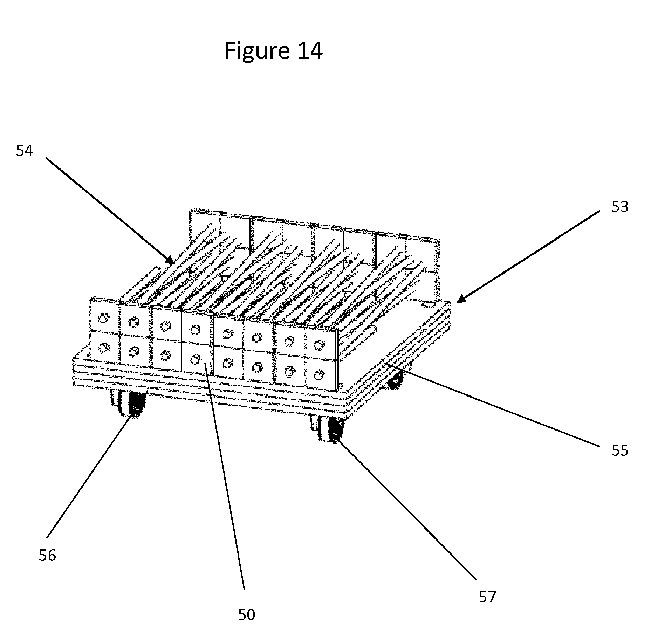

In its second configuration, the wheels 47 will be surrounded by the side panels 44a, 44b, 44c, 44d, 44e, 44f of the support structure 44, and the trolley 43 can be used to form part of a stage.
Referring to Figures 13 and 14, a third embodiment of a modular staging system is shown. Figure 13 shows part of a stage 51. This part of the stage 51 is divided into four units 52, 53. Each unit 52, 53 comprises a support structure 54 comprising a twelve folding tubular metal rods 54a, 54b. In this embodiment, these rods 54a, 54b have two different lengths according to their orientation when erected.

Each set of twelve rods 54a, 54b is connected at the ends by connectors 50. These connectors 50 may be made of metal or plastic. In the embodiment of Figures 13 and 14, eight connectors 50 are used to join together the ends of the twelve rods 54a, 54b of each unit 52, 53. The connectors have pivot connections to the rods which permit the framework 54 to open out or 'pop-up'.

The rods 54a, 54b form a lattice when opened, with four verticals 54b (one at each corner), and a pair of diagonal braces 54a between each corner. The verticals 54b may have a telescoping section in order to match the dimension of the diagonal braces 54b when folded for storage. When opened, the lattice becomes rigid when a deck board is laid in the top to form a stage module 51.

The unit 53 has castors 57 on the bottom surface of the panel 56. When the trolley unit 53 is in the first, transportation, configuration shown in Figure 14, the castors 57 are in contact with the ground. In addition, the support structures 54 of all of the units 52, 53 have been collapsed to form compact sets of twelve mostly parallel rods. This enables compact storage of the rods 54a, 54b. The trolley 53 also transports the panels 55 of the other three units 52.

## Claims

1. A modular staging system (1) comprising a trolley (3) and one or more other modular units (2), wherein the trolley comprises wheels (7) and is movable between a first configuration in which the trolley is suitable for transporting one or more components of the staging system, and a second configuration in which the trolley and the one or more other modular units can be assembled into at least part of a stage;
wherein the trolley further comprises a support structure (4) and a panel (5, 6) detachably connected to the support structure;
wherein the support structure depends from a first surface (6a) of the panel when the trolley is in the second configuration, **characterised in that**, the surface of the panel opposite the first surface forms a second surface (6b), wherein when the trolley is in the first configuration, the support structure is mounted to the second surface of the panel.

2. A modular staging system as claimed in Claim 1, wherein the panel comprises one or more holes (8) or recesses, and wherein each hole or recess is positioned to receive a part of the support structure when the panel is connected to the support structure.

3. A modular staging system as claimed Claim 1 or 2, wherein the wheels of the trolley depend from the first surface of the panel.

4. A modular staging system as claimed in Claim 3, wherein at least one of the wheels of the trolley are positioned radially inwards of the support structure when the trolley is in the second configuration.

5. A modular staging system as claimed in Claim 3, wherein all of the wheels of the trolley are positioned radially inwards of the support structure when the trolley is in the second configuration.

6. A modular staging system as claimed in any one of Claims 1 to 5, wherein the support structure is mounted to the first surface of the panel in a first orientation, and wherein the support structure is mounted to the second surface of the panel in a second orientation, wherein to move the support structure between the first orientation and the second orientation, the support structure is inverted.

7. A modular staging system as claimed in any one of Claims 1 to 6, wherein the support structure comprises a frame.

8. A modular staging system as claimed in Claim 7, wherein the frame comprises at least one leg (4b) and a leg support member (4a), wherein:
- when the trolley is in the first configuration, the wheels are in contact with the ground, and the at least one leg extends generally vertically upwards away from the ground, and
- when the trolley is in the second configuration, the at least one leg extends generally vertically downwards to contact the ground and the wheels are suspended above the ground by the frame.

9. A modular staging system as claimed in Claim 8, wherein the frame additionally comprises one or more projections (12) on the opposite side of the leg support member to the at least one leg, wherein the portions are sized and positioned to fit within a hole or recess in the panel when the panel is connected to the frame.

10. A modular staging system as claimed in any one of Claims 1 to 9, wherein the support structure is made from hollow tubing.

11. A modular staging system as claimed any one of Claims 1 to 10, wherein the one or more other modular units are adapted to be stacked on the trolley in a nested configuration when the trolley is in the first configuration.

12. A trolley for use in a modular staging system, wherein the trolley comprises wheels and is moveable between a first configuration in which the trolley is suitable for transporting one or more components of the staging system, and a second configuration in which the trolley forms part of a stage;
wherein the trolley further comprises a support structure and a panel detachably connected to the support structure;
wherein the support structure depends from a first surface of the panel when the trolley is in the second configuration, **characterised in that**, the surface of the panel opposite the first surface forms a second surface, wherein when the trolley is in the first configuration, the support structure is mounted to the second surface of the panel.

## Patentansprüche

1. Modulares Bühnensystem (1), umfassend einen Wagen (3) und eine oder mehrere andere modulare Einheiten (2), wobei der Wagen Rollen (7) umfasst und zwischen einer ersten Konfiguration, in der der Wagen zum Transportieren von einer oder mehreren Komponenten des Bühnensystems geeignet ist und einer zweiten Konfiguration, in der der Wagen und die eine oder die mehreren anderen modularen Einheiten zu mindestens einem Teil einer Bühne zusammengesetzt werden können, bewegbar ist;
wobei der Wagen weiter eine Stützstruktur (4) und eine lösbar mit der Stützstruktur verbundene Platte (5, 6) umfasst;
wobei die Stützstruktur von einer ersten Oberfläche (6a) der Platte herunterhängt, wenn sich der Wagen in der zweiten Konfiguration befindet, **dadurch gekennzeichnet, dass** die der ersten Oberfläche gegenüberliegende Oberfläche der Platte eine zweite Oberfläche (6b) bildet, wobei, wenn sich der Wagen in der ersten Konfiguration befindet, die Stützstruktur an der zweiten Oberfläche der Platte angebracht ist.

2. Modulares Bühnensystem nach Anspruch 1, wobei die Platte ein oder mehrere Löcher (8) oder Aussparungen umfasst, und wobei die Löcher oder Aussparungen jeweils dazu positioniert sind, einen Teil der Stützstruktur aufzunehmen, wenn die Platte mit der Stützstruktur verbunden ist.

3. Modulares Bühnensystem nach Anspruch 1 oder 2, wobei die Rollen des Wagens von der ersten Oberfläche des Wagens herunterhängen.

4. Modulares Bühnensystem nach Anspruch 3, wobei mindestens eine der Rollen des Wagens radial innerhalb der Stützstruktur positioniert ist, wenn sich der Wagen in der zweiten Konfiguration befindet.

5. Modulares Bühnensystem nach Anspruch 3, wobei alle der Rollen des Wagens radial innerhalb der Stützstruktur positioniert sind, wenn sich der Wagen in der zweiten Konfiguration befindet.

6. Modulares Bühnensystem nach einem der Ansprüche 1 bis 5, wobei die Stützstruktur in einer ersten Orientierung an der ersten Oberfläche der Platte angebracht ist, und wobei die Stützstruktur in einer zweiten Orientierung an der zweiten Oberfläche der Platte angebracht ist, wobei zum Bewegen der Stützstruktur zwischen der ersten Orientierung und der zweiten Orientierung die Stützstruktur umgekehrt wird.

7. Modulares Bühnensystem nach einem der Ansprüche 1 bis 6, wobei die Stützstruktur einen Rahmen umfasst.

8. Modulares Bühnensystem nach Anspruch 7, wobei der Rahmen mindestens ein Bein (4b) und ein Beinstützelement (4a) umfasst, wobei:
- wenn sich der Wagen in der ersten Konfiguration befindet, die Rollen sich mit dem Boden in Kontakt befinden, und sich das mindestens eine Bein allgemein senkrecht nach oben vom Boden weg erstreckt, und
- wenn sich der Wagen in der zweiten Konfiguration befindet, sich das mindestens eine Bein allgemein senkrecht nach unten erstreckt, um sich mit dem Boden in Kontakt zu befinden, und die Rollen von dem Rahmen über dem Boden hängend gehalten werden.

9. Modulares Bühnensystem nach Anspruch 8, wobei der Rahmen außerdem einen oder mehrere Vorsprünge (12) auf der dem mindestens einen Bein gegenüberliegenden Seite des Beinstützelements umfasst, wobei die Abschnitte dazu bemessen und positioniert sind, in ein Loch oder eine Aussparung in der Platte zu passen, wenn die Platte mit dem Rahmen verbunden ist.

10. Modulares Bühnensystem nach einem der Ansprüche 1 bis 9, wobei die Stützstruktur aus hohlen Rohren hergestellt ist.

11. Modulares Bühnensystem nach einem der Ansprüche 1 bis 10, wobei die eine oder die mehreren modularen Einheiten dazu angepasst sind, in einer nestartigen Konfiguration auf dem Wagen gestapelt zu werden, wenn sich der Wagen in der ersten Konfiguration befindet.

12. Wagen zur Verwendung in einem modularen Bühnensystem, wobei der Wagen Rollen umfasst und zwischen einer ersten Konfiguration, in der der Wagen zum Transportieren von einer oder mehreren Komponenten des Bühnensystems geeignet ist und einer zweiten Konfiguration, in der der Wagen einen Teil einer Bühne bildet, bewegbar ist;
wobei der Wagen weiter eine Stützstruktur und eine lösbar mit der Stützstruktur verbundene Platte umfasst;
wobei die Tragstruktur von einer ersten Oberfläche der Platte herunterhängt, wenn sich der Wagen in der zweiten Konfiguration befindet, **dadurch gekennzeichnet, dass** die der ersten Oberfläche gegenüberliegende Oberfläche der Platte eine zweite Oberfläche bildet, wobei, wenn sich der Wagen in der ersten Konfiguration befindet, die Tragstruktur an der zweiten Oberfläche der Platte angebracht ist.

## Revendications

1. Système de scène modulaire (1) comprenant un chariot (3) et une ou plusieurs autres unités modulaires (2), le chariot étant doté de roues (7) et pouvant être déplacé entre une première configuration, dans laquelle le chariot est approprié pour le transport d'un ou plusieurs composants du système de scène, et une deuxième configuration, dans laquelle le chariot et la ou plusieurs autres unités modulaires peuvent être assemblés dans au moins une partie d'une scène ;
le chariot comprenant en outre une structure de support (4), et un panneau (5,6) raccordé de façon amovible à la structure de support ;
la structure de support dépendant d'une première surface (6a) du panneau lorsque le chariot se trouve dans la deuxième configuration, **caractérisé en ce que** la surface du panneau faisant face à la première surface forme une deuxième surface (6b), le chariot se trouvant dans la première configuration, la structure de support étant montée sur la deuxième surface du panneau.

2. Système de scène modulaire selon la revendication 1, le panneau comprenant un ou plusieurs trous (8) ou évidements, et chaque trou ou évidemment étant positionné de façon à recevoir une partie de la structure de support lorsque le panneau est raccordé à la structure de support.

3. Système de scène modulaire selon la revendication 1 ou 2, les roues du chariot étant tributaires de la première surface du panneau.

4. Système de scène modulaire selon la revendication 3, au moins une des roues du chariot étant positionnée radialement vers l'intérieur de la structure de support, lorsque le chariot se trouve dans la deuxième configuration.

5. Système de scène modulaire selon la revendication 3, toutes les roues du chariot étant positionnées radialement vers l'intérieur de la structure de support, lorsque le chariot se trouve dans la deuxième configuration.

6. Système de scène modulaire selon une quelconque des revendications 1 à 5, la structure de support étant montée sur la première surface du panneau dans une première orientation, et la structure de support étant montée sur la deuxième surface du panneau dans une deuxième orientation, et afin de déplacer la structure de support entre la première orientation et la deuxième orientation, la structure de support est inversée.

7. Système de scène modulaire selon une quelconque des revendications 1 à 6, la comprenant un châssis.

8. Système de scène modulaire selon la revendication 7, le châssis comprenant au moins un montant (4b) et un support de montant (4a), dans lequel :
- lorsque le chariot se trouve dans la première configuration, les roues sont au contact du sol, et le montant au nombre d'au moins un se déploie dans une direction généralement verticale vers le haut dans le sens opposé au sol, et
- lorsque le chariot se trouve dans la deuxième configuration, le montant au nombre d'au moins un se déploie dans une direction généralement verticale vers le bas pour se mettre au contact du sol, tandis que les roues sont suspendues au-dessus du sol par le châssis.

9. Système de scène modulaire selon la revendication 8, le châssis comprenant en outre une ou plusieurs saillies (12) sur le côté opposé du support de montant jusqu'au montant au nombre d'au moins un, les parties étant dimensionnées et positionnées de façon à tenir dans un trou ou un évidement dans le panneau, lorsque le panneau est raccordé au châssis.

10. Système de scène modulaire selon une quelconque des revendications 1 à 9, la structure de support étant réalisée avec des tubes creux.

11. Système de scène modulaire selon une quelconque des revendications 1 à 10, le ou plusieurs autres unités modulaires étant adaptés pour être empilés sur le chariot dans une configuration à emboîtement, lorsque le chariot se présente dans la première configuration.

12. Chariot pour un système de scène modulaire, le chariot comprenant des roues et pouvant être déplacé entre une première configuration, dans laquelle le chariot est approprié pour le transport d'un ou plusieurs composants du système de scène, et une deuxième configuration, dans laquelle le chariot fait partie de la scène ;
le chariot comprenant en outre une structure de support et un panneau raccordés de façon amovible à la structure de support ;
la structure de support étant tributaire d'une première surface du panneau lorsque le chariot se présente dans la deuxième configuration, **caractérisé en ce que** la surface du panneau faisant face à la première surface forme une deuxième surface, de sorte que lorsque le chariot se trouve dans la première configuration, la structure de support est montée sur la deuxième surface du panneau.
